# EUROPEAN PATENT APPLICATION

(11) **EP 4 838 383 A1**
(43) Date of publication of application: **11.11.2026**
(21) Application number: 26176624.0
(22) Date of filing: 05.05.2026
(51) Int. Cl.: G06F 16/9032

(54) **IMPROVED PREFIX ADAPTERS FOR INGESTION OF SEMANTIC INFORMATION FROM NON-LOCAL EMBEDDING SPACES**

(30) Priority: 05.05.2025 US 202563800224 P; 21.10.2025 US 202519364818
(71) Applicant: Spotify AB, 111 53 Stockholm (SE)
(72) Inventor: HUBER, Bernd, 111 53 Stockholm (SE)
(74) Representative: Ström & Gulliksson AB

(57) **Abstract**

Embodiments are provided for improved personalization of LLM or other generative model outputs to specific users or other entities. An adapter model generates, from an input embedding that represents a user, one or more output embeddings. The input embedding represents the user in a first embedding space (e.g., an embedding space that efficiently represents the musical or other preferences of users) while the output embedding is the internal "native" embedding space of a large language model or other generative model. The adapter model is trained to translate the input embeddings from the input embedding space to the "native" embedding space of the generative model, allowing the generative model to efficiently ingest personalization information about users (or other entities) without incurring the significant computational cost to fine-tune or otherwise adapt the generative model to the specifics of the first embedding space.

## Description

### BACKGROUND

A variety of machine learning models exist that represent inputs, outputs, intermediate results, or other subjects as embedding vectors in high-dimensional vector spaces. Such vector spaces may encode information semantically or otherwise such that an embedding vector therein can represent a wide variety of information about a user, media content, place, object, or other subject in a manner that is highly informative but still compact and easily manipulated computationally. For example, a machine learning model could be trained to receive a user's listening history, natural language statements of music preferences, or other information and generate therefrom an embedding vector, in a high-dimensional vector embedding space, that represents the user's musical preferences such that users with similar preferences are nearby in the embedding space (and users with dissimilar preferences are far in the embedding space). Such embedding vectors can then be used to compare and contrast the preferences of different users, to search for media that is similar to a user's preferences, or to facilitate other applications. Different machine learning models may represent similar scopes of information in respective different embedding spaces; however, the specific structure of each model's embedding space is generally idiosyncratic, making it difficult to translate the information represented by an embedding vector in a first model's embedding space into the embedding space of a second model.

Many machine learning models can be characterized by an internal embedding vector space that semantically represents, in a high-dimensional embedding vector space, information about the subject of the machine learning model. However, the specific semantic structure and organization of such embedding vector spaces are usually idiosyncratic, the result of stochastic processes during the training process and the specifics of the training dataset used. Thus, while such embedding vector spaces may represent useful information (e.g., about the content preferences of users of a media provisioning system, about the contents of images generated by a generative model), it is difficult to extract this information (e.g., in a human-interpretable format) or to translate such information between the embedding spaces of different machine learning models. Many known solutions can be computationally expensive.

### SUMMARY

A system of one or more computers can be configured to perform particular operations or actions by virtue of having software, firmware, hardware, or a combination thereof installed on the system that in operation causes or cause the system to perform the actions. One or more computer programs can be configured to perform particular operations or actions by virtue of including instructions that, when executed by data processing apparatus, cause the apparatus to perform the actions.

One general aspect involves a computer-implemented method that includes: (i) obtaining a record that is representative of an entity; (ii) generating, from the record, a first vector embedding within a first embedding vector space, wherein the first vector embedding represents the entity within the first embedding vector space; (iii) projecting, by way of a first multi-layer model, the first vector embedding into a first set of token vectors within a second embedding vector space, wherein the second embedding vector space is associated with a second multi-layer model, wherein the first embedding vector space and second embedding vector space are different embedding vector spaces, and wherein the second vector embedding represents the entity within the second embedding vector space; and (iv) applying, as input to the second multi-layer model, the first set of token vectors and a representation of a prompt to generate a first output, wherein applying the first set of token vectors and the representation of the prompt as input to the second multi-layer model comprises applying tokens of the first set of token vectors as initial inputs to the second multi-layer model.

By translating information in the first vector from the embedding vector space of the first model to the embedding vector space of the second model, the full set of information can be made available to the second model (compared to a translation into a truncated set of tokens or other method that may restrict the amount of information used). Additionally, the use of a small (e.g., one) set of prefix tokens to input the translated vector information into the second model results in only an insignificant increase in the necessary input width of the second model compared, e.g., to applying a multi-token summary of the first vector information, the full or truncated set of information used to generate the first vector, or some other longer multi-token representation of the information in the first vector. These significant benefits (with respect to the computational cost of obtaining the benefits of the first vector information) are obtained via the minimal, and relatively lesser, computational cost of inferencing the translator model to convert the first vector into one or more token vectors for input to the second model.

Other embodiments of this aspect include corresponding computer systems, apparatus, and computer programs recorded on one or more computer storage devices, each configured to perform the actions of the methods.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

### BRIEF DESCRIPTION OF THE DRAWINGS

Figure 1 is a block diagram illustrating a media content delivery system, in accordance with example embodiments.
Figure 2 is a block diagram illustrating an electronic device, in accordance with example embodiments.
Figure 3 is a block diagram illustrating a media content server, in accordance with example embodiments.
Figure 4 is a block diagram illustrating aspects of a method, in accordance with example embodiments.
Figure 5 is a flow chart, in accordance with example embodiments.
Figure 6 is a block diagram illustrating an aspect of an implementation, in accordance with example embodiments.
Figure 7A depicts experimental results, in accordance with example embodiments.
Figure 7B depicts experimental results, in accordance with example embodiments.

### DETAILED DESCRIPTION

Example methods, devices, and systems are described herein. It should be understood that the word "example" or "exemplary" to the extent used herein means "serving as a possible instance or illustration." Any embodiment or feature described herein as being an "example" or "exemplary" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations. For example, any separation of features into "client" and "server" components may occur in a number of ways.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

Still further, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

In addition, unless clearly indicated otherwise herein, the term "or" is to be interpreted as the inclusive disjunction. For example, the phrase "A, B, or C" is true if any one or more of the arguments A, B, C are true, and is only false if all of A, B, and C are false.

### I. Example System and Device Architecture

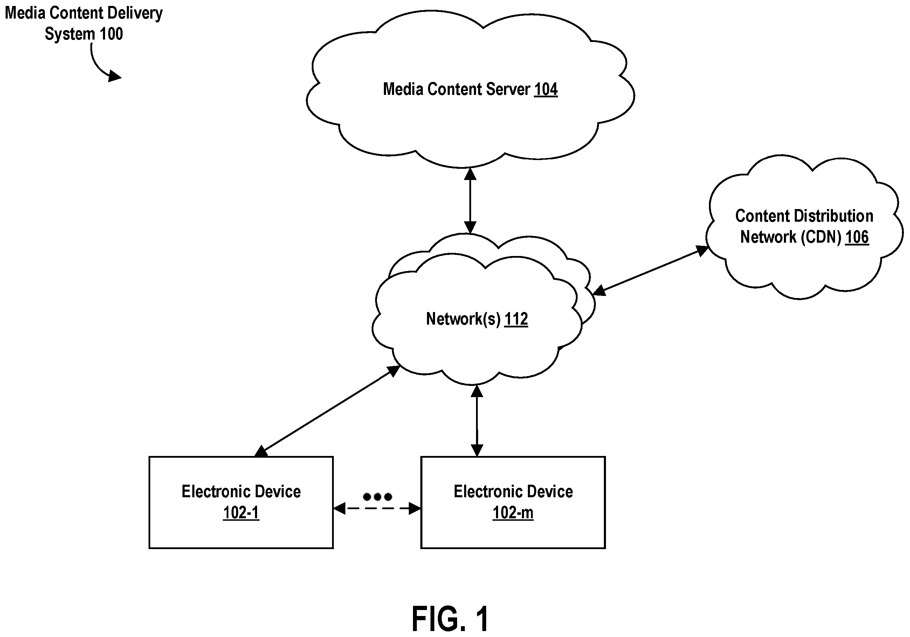

Figure 1 is a simplified block diagram illustrating an example media content delivery system 100. The example media content delivery system 100 includes one or more electronic devices 102 (e.g., electronic device 102-1 to electronic device 102-m, where m is an integer greater than one), at least one media content server 104, and at least one content distribution network (CDN) 106. With this arrangement, the media content server 104 may be configured to stream or otherwise provide media content items, possibly through the CDN 106, for receipt and playout by the electronic devices 102.

Media content items (also referred to as "media content", "content", "media items", and "content items") may take various forms. For instance, the media content items may include audio (e.g., music, spoken word, podcasts, audiobooks, etc.), video (e.g., short-form videos, music videos, television shows, movies, clips, previews, etc.), text (e.g., articles, blog posts, emails, etc.), image data (e.g., image files, photographs, drawings, renderings, etc.), games (e.g., 2D or 3D graphics-based computer games, etc.), web pages, and/or any combination of these and/or other types of content. In some embodiments, media content items may include one or more audio media content items, such as particular songs, podcasts, or audio books, that may be referred to as "audio items," "tracks," and/or "audio tracks".

As shown, one or more networks 112 may communicatively couple the components of the media content delivery system 100. The one or more networks 112 may include public communication networks, private communication networks, or a combination of both public and private communication networks. For example, the one or more networks 112 could include one or more wide area networks (WANs) such as the Internet, a cellular network, and a satellite communication network, and/or could include one or more local area networks (LAN), virtual private networks (VPN), metropolitan area networks (MAN), peer-to-peer networks, mesh networks, and/or ad-hoc connections, among other possibilities.

Example electronic devices 102, which may be associated respectively with one or more users, may take various forms. For instance, an electronic device 102 could be a personal computer, a mobile electronic device, a wearable computing device, a laptop computer, a tablet computer, a mobile phone, a feature phone, a smartphone, an infotainment system, a digital media player, a gaming device, a speaker, a television (TV), and/or any other electronic device capable of playing and/or presenting media content (e.g., controlling playback of media items, such as music tracks, podcasts, videos, etc.) Alternatively, the electronic device 102 may be a component of another system such as a home entertainment system, a radio/alarm clock, or an infotainment system of a vehicle, for instance, and may enable that system to play media content.

In some embodiments, the electronic devices 102 may be the same type of device as each other (e.g., electronic device 102-1 and electronic device 102-m are both speakers). In other embodiments, the electronic devices 102 may include two or more different types of devices.

The example electronic devices 102 may also be configured to communicate with each other through direct or networked communication links, represented by the dashed arrow in Figure 1, which may include wireless and/or wired connections. For instance, the electronic devices 102 may communicate with each other through a direct wired connection such as a High Definition Multimedia Interface (HDMI) connection, or through a direct wireless communication such as short or medium range wireless signaling using technologies such as BLUETOOTH, BLUETOOTH LOW ENERGY (BLE), ZIGBEE, WI-FI, WIRELESSHART, Near Field Communication (NFC), Radio Frequency Identification (RFID), infrared, Thread, Z-Wave, MiWi, Low-Rate Wireless Personal Area Network (LR-WPAN), or Internet Protocol v. 6 (IPv6) over WPAN (6oWPAN), among other possibilities. Alternatively or additionally, the electronic devices 102 may communicate with each other through one or more networks (perhaps one or more of network(s) 112), such as through a wireless mesh network, a LAN, a cellular network, or other form of network. Through these inter-device connections, one electronic device 102-1 may stream or otherwise transmit media content to another electronic device 102-m to facilitate playout of the media content.

An example electronic device 102 may be configured to play media content items, outputting the associated media content for presentation to a user and/or outputting the associated media content through an inter-device connection to another electronic device for presentation to a user.

The electronic device 102 may obtain these media content items from local data storage and/or through transmission from the media content server 104, CDN 106, or other device or system. For instance, the electronic device 102 may include or otherwise have access to local data storage containing some of these media content items and may be configured to retrieve the media content items from that local data storage and to play out the retrieved media content items. Further the electronic device 102 may be configured to interwork with the media content server 104 to cause the media content server 104 to stream, progressively download, and/or otherwise transmit media content items to the electronic device 102, and the electronic device 102 may be configured to receive and play out those transmitted media content items as well. In some cases, an example electronic device 102 may also be configured to transmit to the media content server 104 indications of media content items, possibly the media content items themselves, for various purposes.

To facilitate playout of media content items, the example electronic device 102 may be programmed with a media application. The media application may provide a user interface (e.g., a graphical user interface (GUI)) through which a user of the electronic device 102 can control playing of media content items, and the media application may include a media-playback engine configured to obtain and play out media content items in response to user control commands and/or other triggers.

For instance, the media application may receive a user's control commands related to playout of media content items, such as requests to play particular media content items or playlists of media content items and commands to pause or stop media playout, to adjust volume, or to jump to a next track or a previous track, among other possibilities. And the media application may be configured to respond to those commands by engaging in associated control signaling with the media content server 104 to control streaming or other transmission of media content items from the media content server 104 to the electronic device 102 and/or by engaging in associated control of playing out media content items from local data storage.

An example media content server 104 may be configured to receive media commands or other requests from electronic devices 102 and to respond accordingly. To facilitate this, in some embodiments, the media content server 104 may provide an application programming interface (API), such as a voice API or a connect API, accessible by one or more of the electronic devices 102. The media content server 104 may also be configured to validate (e.g., authenticate) electronic devices 102 using a key service, such as by exchanging one or more keys (e.g., tokens) with the electronic device 102.

The example media content server 104 may include or otherwise have access to data storage storing media content items available for transmission to electronic devices 102, as well as playlists each defining a sequence or other set of media content items for playout. Playlists may be defined by users of the electronic devices 102, by editors associated with media-providing services, and/or by machine-based processes, among other possibilities. The media content server 104 may also be configured to provide electronic devices 102 with information about the available media content items and playlists, such as web pages or other interfaces presenting the information, to enable users of the electronic devices 102 to obtain this information and to correspondingly control media playout.

Further, in some implementations, the media content server 104 may interwork with the one or more CDNs 106 to facilitate management and transmission of media content items and associated information to the electronic devices 102. For instance, a CDN 106 may cache media content items, playlists, and associated data and may be configured to transmit this data to electronic devices 102 through the network(s) 112 in response to requests from the electronic devices.

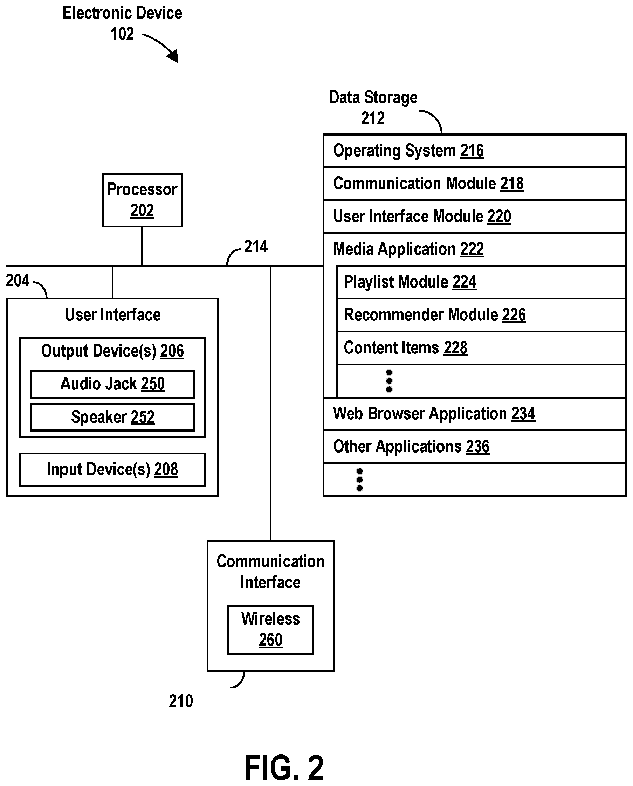

Figure 2 is a simplified block diagram illustrating an example electronic device 102. As shown in Figure 2, the example electronic device 102 includes a processor 202, a user interface 204, a communication interface 210, and non-transitory data storage 212, any or all of which may be integrated together to various extents and/or communicatively linked with each other by a system bus, network, or other connection mechanism 214, on a chipset or other integrated circuit, among other possibilities.

The processor 202 may include one or more general purpose processors (e.g., microprocessors) and/or one or more specialized processors (e.g., digital signal processors (DSPs), graphics processing units (GPUs), neural processing units (NPUs), etc.)

The user interface 204 may include one or more output devices 206 and one or more input devices 208 to facilitate interaction with a user. Example output devices 206 may include audio output devices such as an audio jack 250, a sound speaker 252, and/or another port or the like for connecting with speakers, earbuds, headphones, and/or other listening devices, and video output devices, such as a display panel for instance. Further, example input devices 208 may include an audio input device such as a microphone and other types of user input mechanisms such as a touch-sensitive panel, a keyboard or keypad, and/or a mouse or trackpad, among other possibilities. In some embodiments, the user interface may support voice input, and the electronic device 102 may include or interact with a voice recognition system to facilitate processing of voice input from a user.

The communication interface 210 may include one or more components to facilitate communicating with other electronic devices 102, with the media content server 104, with the CDN 106, with associated media presentation systems, and/or with other devices and/or systems. For instance, the communication interface 210 may include one or more wireless communication interfaces 260 configured to facilitate direct or networked communication according to any of various wireless communication protocols, such as those noted above, among others. In addition or alternatively, the communication interface 210 may include one or more wired communication interfaces supporting direct or networked communication according to any of various wired communication protocols, such as HDMI, Universal Serial Bus (USB), THUNDERBOLT, and/or Ethernet, among others.

The non-transitory data storage 212 may include one or more volatile and/or nonvolatile storage components (e.g., flash, optical, magnetic, read only memory (ROM), random access memory (RAM) (e.g., dynamic RAM (DRAM), static RAM (SRAM), or double data rate RAM (DDRAM)), electronically programmable read only memory (EPROM), and/or electronically erasable programmable read only memory (EEPROM), etc.), which may be integrated in whole or in part with the processor 202 or may be provided separately. As further shown, the data storage 212 may store program instructions, which may be executable by the processor 202 to carry out various electronic device operations.

These instructions may define programs, modules, and/or data structures, such as but not limited to an operating system 216, a communication module 218, a user interface module 220, a media application 222, a web browser application 234, and one/or more other applications 236. Further, these instructions may be structured as separate software programs, procedures, modules, or the like, and/or may be combined together and/or otherwise arranged in various embodiments.

The operating system 216 may define procedures for handling various basic system services and for performing hardware-dependent tasks. The communication module 218 may define procedures supporting connection and communication with other computing devices and systems (e.g., with the media content server 104, the CDN 106, with various media presentation systems, and/or with other electronic devices 102) through the communication interface 210 and possibly the one or more networks 112. And the user interface module 220 may define procedures supporting use of the user interface 204, such as to receive commands and/or other input from a user and to provide media playback and other output to the user.

In line with the discussion above, the media application 222 may be a program application configured to access a media-providing service of a media-content provider associated with the media content server 104 for instance, and may be configured to support requesting, receiving, processing, and presenting of media content items. In some implementations, the media application 222 may include a media-player, a streaming-media application, and/or any other appropriate application or component to facilitate retrieval and/or receipt of media content and playing of the media content. Further, the media application 222 may be configured to monitor, store, and/or transmit (e.g., to the media content server 104) data associated with user behavior, with user permission. Further, the media application 222 may define various logic modules, such as a playlist module 224, a recommender module 226, and/or a content-items module 228.

The playlist module 224 may store sets of media items for playback in a predefined order. Further, the playlist module 224 may be configured to generate playlists. In some embodiments, the playlist module 224 may include a diffusion-model component, a large-language-model component, and/or a nearest-neighbor-search component, among other possibilities. The recommender module 226 may be configured to identify and/or display recommended media content items (e.g., for inclusion in a playlist). The recommender module 226 may likewise include a diffusion-model component, a large-language-model component, and/or a nearest-neighbor-search component, among other possibilities. The content-items module 228 may be configured to store media content items, including audio items such as songs, podcasts, and audiobooks, for playback, and to provide requests for media content items to the media content server 104. In some implementations, the content-items module 228 may include or otherwise have access to a set of vector representations for the media content items.

The web browser application 234 may be configured to support user access, viewing, and interaction with web sites. To facilitate this, the web browser application 234 may be configured to use standard web-based communication protocols, web-based applications, and/or web-based content formats and/or may be configured to use proprietary protocols, applications, and formats.

The other applications 236 in the non-transitory data storage 212 of the electronic device 102 may then include any of a variety of additional applications, supporting operations such as word processing, calendaring, mapping, weather, time keeping, virtual digital assistant, presenting, drawing, instant messaging, e-mail, telephony, video conferencing, photo management, video management, music playing, video playing, 2D gaming, 3D (e.g., virtual reality) gaming, electronic book reading, and/or workout management, among other possibilities.

The example electronic device 102 may also include one or more sensors (not shown) such as accelerometers, gyroscopes, compasses, magnetometer, light sensors, near field communication transceivers, barometers, humidity sensors, temperature sensors, proximity sensors, range finders, and/or other devices for sensing and measuring various operational, environmental and/or other conditions, among possibly other components.

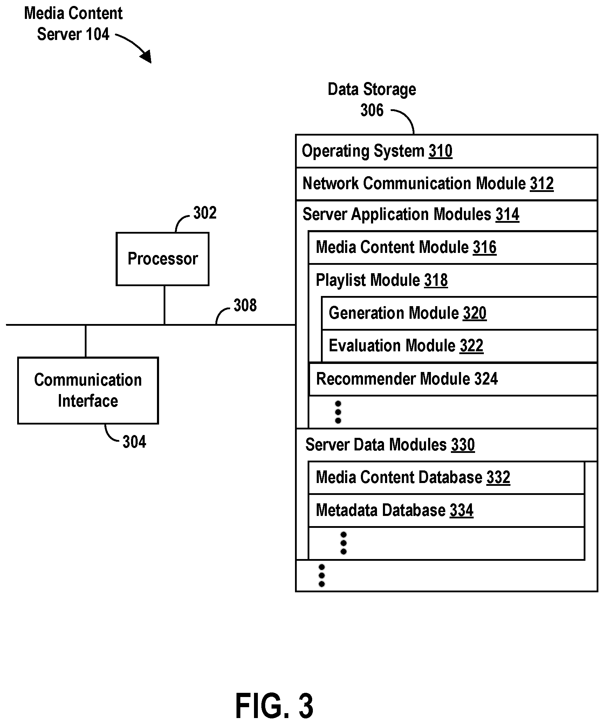

Figure 3 is next a simplified block diagram of an example media content server 104. As shown in Figure 3, the example media content server 104 includes a processor 302, a communication interface 304, and non-transitory data storage 306, any or all of which may be integrated together to various extents and/or communicatively linked with each other by a system bus, network, or other connection mechanism 308, on a chipset or other integrated circuit, among other possibilities.

The processor 302 may include one or more general purpose processors (e.g., microprocessors) and/or one or more specialized processors (e.g., DSPs, GPUs, NPUs, etc.)

The communication interface 304 may comprise a network communication interface to facilitate communicating with the electronic devices 102 and the CDN 106 through the one or more networks 112. For instance, the communication interface 304 may include a wired and/or wireless Ethernet communication module, among other possibilities.

The non-transitory data storage 306 may include one or more volatile and/or nonvolatile storage components (e.g., flash, optical, magnetic, ROM, RAM) (e.g., DRAM, SRAM, or DDRAM), EPROM, and/or EEPROM, etc.), which may be integrated in whole or in part with the processor 302 or may be provided separately. As further shown, the data storage 306 may store program instructions, which may be executable by the processor 302 to carry out various media-content-server operations.

These instructions may define programs, modules, and/or data structures, such as but not limited to an operating system 310, a network communication module 312, one or more server application modules 314, and one or more server data modules 330. Further, these instructions may be structured as separate software programs, procedures, modules, or the like, and/or may be combined together and/or otherwise arranged in various embodiments.

The operating system 310 may define procedures for handling various basic system services and for performing hardware-dependent tasks. And the communication module 312 may define procedures supporting connection and communication with other computing devices and systems, such as with the electronic devices 102 and the CDN 106, through the communication interface 304 and possibly through the one or more networks 112.

The one or more server application modules 314 may define procedures supporting providing and managing a content service. These server application modules 314 may include a media content module 316, a playlist module 318, and/or a recommender module 324, among other possibilities.

The media content module 316 may store and/or otherwise have access to media content items and may be configured to send (e.g., stream and/or progressively transmit) the media content items to the electronic devices 102. The playlist module 318 may store and/or otherwise have access to data defining sequences or other sets of media content items and may be configured to send those playlists to the electronic devices 102. The playlist module 318 may include a generation module 320 for generating playlists and media sets, and an evaluation module 322 for evaluating the playlists and media sets, e.g., before and after publication. Further, the playlist module 318 may include a diffusion-model component, a large-language-model component, and/or a nearest-neighbor-search component, among other possibilities.

The recommender module 324 may determine and/or provide media-content- item recommendations (e.g., for a playlist). In some embodiments, the recommender module 324 also includes a diffusion-model component, a large-language-model component, and/or a nearest neighbor-search component, among other possibilities.

The one or more server data modules 330 may manage the storage of and/or access to media items and/or metadata relating to media content items. As such, the one or more server data modules 330 may include a media content database 332 for storing media items and/or vector representations (e.g., vector embeddings) of the media content items, and a metadata database 334 for storing metadata relating to the media content items, such as genre, artist, and other information associated with the respective media content items.

The media content server 104 may also include a web server such as a Hypertext Transfer Protocol (HTTP) servers, File Transfer Protocol (FTP) servers, and may maintain or otherwise have access to web pages and other content defined with Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

The description of the media content server 104 as a "server" is intended as a functional description of the devices, systems, processor cores, and/or other components that provide the functionality attributed to the media content server 104. It will be understood that the media content server 104 may be a single server computer, or may comprise multiple server computers. Moreover, the media content server 104 may be coupled with CDN 106 and/or other servers and/or server systems, or other devices, such as other client devices, databases, content delivery networks (e.g., peer-to-peer networks), network caches, and the like. Further, in some embodiments, the media content server 104 may be implemented by multiple computing devices working together to perform the actions of a server system, such as to provide cloud-based server or cloud-computing service.

### II. Digital Audio Content and Streaming

Digital audio content may encompass a broad range of audio data that has been converted into a digital format, enabling it to be stored, processed, transmitted, and received by electronic devices. By way of example, digital audio content could include songs and other music, as well as spoken word recordings such as news broadcasts, podcasts, audiobooks, that offer listeners a convenient way to consume information and entertainment through auditory means. Further, digital audio content could combine spoken word with music or other sounds, creating rich, multi-layered audio experiences suitable for radio shows, multimedia presentations, and enhanced podcasts. And still further, digital audio content could constitute the audio portion of multimedia video content (e.g., of H.264/MPEG-4 or 3GP encoded content), such as the soundtrack of a movie, television show, online video, or live stream, among many other possibilities.

Digital audio content represents analog audio content as a sequence of digital information such as a bits representing sequential frames of the analog audio. Digital audio content may be compressed or otherwise encoded using various encoding techniques (e.g., MP3, AAC, or Opus) to help reduce file size while maintaining quality and to help facilitate distribution of the audio through various techniques such as streaming, progressive downloading, bulk file transfer, or broadcasting, for instance.

Digital audio streaming involves transmitting a digital audio stream from a content source (e.g. media content server 104 or CDN 106) to an electronic device 102, typically over a network 112, for real-time playout of the audio by the electronic device 102 as the electronic device 102 receives the transmission. A variation of audio streaming is progressive downloading, where an electronic device 102 downloads a digital audio file in pieces and plays out the audio file before the entire download is finished. One technical difference between streaming and progressive downloading is that, with streaming, the electronic device 102 usually does not maintain a copy of the audio as the electronic device 102 plays it out, whereas with progressive downloading, the electronic device 102 ends up with a downloaded copy of the audio for possible later playout as well.

To prepare digital audio for streaming or other distribution, a computing system such as the media content server 104 may start with a digital audio file that defines a time sequence of digital audio data such as a sequence of audio frames, the computing system may encode the digital audio data of the file using an encoding algorithm to establish a corresponding time sequence of encoded digital audio data, and the computing system may segment the encoded digital audio data into smaller pieces or audio segments, which the computing system may store for transmission. Further, the computing system may generate multiple different encoded versions of the digital audio segments per file, using multiple different levels or types of encoding and compression, to facilitate adaptive switching between versions during transmission.

To facilitate streaming of an audio content item to an electronic device 102, the media content server 104 may employ a streaming protocol such as HTTP Live Streaming (HLS), Dynamic Adaptive Streaming over HTTP (DASH), or Real-Time Messaging Protocol (RTMP) to transmit the audio segments. These protocols manage the data transmission and adapt to varying network conditions. Additionally, the media content server 104 may handle user sessions, managing requests for specific audio streams and providing secure access through authentication and authorization mechanisms. The media content server 104 may also make use of the CDN 106, which may cache the audio content pieces on geographically distributed servers, to help reduce streaming latency and improve reliability and user experience.

On the receiving end, the media application 222 of the electronic device 102 may initiate a connection to the media content server 104 and request streaming of a specific audio content item. As the media application 222 receives the initial audio segments of the requested audio content in response to this request, the media application 222 may then start buffering and pre-loading a portion of the audio in the memory of the electronic device 102 to facilitate smooth playback even in the case of minor network interruptions. Further, the media application 222 may decode the audio pieces in order to uncover the original digital audio data and may convert that digital audio data to a form suitable for output. For instance, the media application 222 may play the decoded audio through an audio output device 206 of the electronic device 102 or through another electronic device 102. Further, the media application 222 may manage playback (e.g., play, pause, skip, and volume adjustment) through associated user-interface controls.

Adaptive streaming protocols such as those discussed above may allow the electronic device 102 to monitor network conditions and request different quality levels of digital audio content based on current bandwidth availability, thus providing consistent playback without interruptions in most cases. Further, the electronic device 102 may handle network errors and interruptions by attempting to reconnect to the media content server 104, by re-buffering when necessary, and by dynamically adjusting the stream quality to maintain a continuous audio experience.

### III. Natural Language Models

Generative artificial intelligence models, such as large language models (LLMs), can be used for selection of media content items for streaming to electronic devices 102. These LLMs may be part of, operate in conjunction with, and/or be accessed by media content server 104.

An LLM is an advanced computational model, primarily functioning within the domain of natural language processing (NLP) and machine learning. An LLM can be configured to understand, interpret, generate, and respond to human language in a manner that is both contextually relevant and syntactically coherent. The underlying structure of an LLM is typically based on a neural network architecture, more specifically, a variant of the transformer model. Transformers are notable for their ability to process sequential data, such as text, with high efficiency.

The operation of an LLM involves layers of interconnected processing units, known as neurons, which collectively form a neural network. This network can be trained on vast datasets comprising text from diverse sources, thereby enabling the LLM to learn a wide array of language patterns, structures, and colloquial nuances for prose, poetry, and program code. The training process involves adjusting the weights of the connections between neurons using algorithms such as backpropagation, in conjunction with optimization techniques like stochastic gradient descent, to minimize the difference between the LLM's output and expected output.

An aspect of an LLM's functionality is its use of attention mechanisms, particularly self-attention, within the transformer architecture. These mechanisms allow the model to weigh the importance of different parts of the input text differently, enabling it to focus on relevant aspects of the data when generating responses or analyzing language. The self-attention mechanism facilitates the model's ability to generate contextually relevant and coherent text by understanding the relationships and dependencies between words or tokens in a sentence (or longer parts of texts), regardless of their position.

In response to receiving an input, such as a text query or a prompt, the LLM may process this input through its multiple layers, generating a probabilistic model of the language therein. It predicts the likelihood of each word or token that might follow the given input, based on the patterns it has learned during its training. The model then generates an output, which could be a continuation of the input text, an answer to a query, or other relevant textual content, by selecting words or tokens that have the highest probability of being contextually appropriate.

Furthermore, an LLM can be fine-tuned after its initial training for specific applications or tasks. This fine-tuning process involves additional training (e.g., with reinforcement from humans), usually on a smaller, task-specific dataset, which allows the model to adapt its responses to suit particular use cases more accurately. This adaptability makes LLMs highly versatile and applicable in various domains, including but not limited to, chatbot development, language translation, and sentiment analysis.

Some LLMs are multimodal in that they can receive prompts in formats other than text and can produce outputs in formats other than text. Thus, while LLMs are predominantly designed for understanding and generating textual data, multimodal LLMs extend this functionality to include multiple data modalities, such as visual and auditory inputs, in addition to text.

A multimodal LLM can employ an advanced neural network architecture, often a variant of the transformer model that is specifically adapted to process and fuse data from different sources. This architecture integrates specialized mechanisms, such as convolutional neural networks for visual data and recurrent neural networks for audio processing, allowing the model to effectively process each modality before synthesizing a unified output.

The training of a multimodal LLM involves multimodal datasets, enabling the model to learn not only language patterns but also the correlations and interactions between different types of data. This cross-modal training results in multimodal LLMs being adept at tasks that require an understanding of complex relationships across multiple data forms, a capability that text-only LLMs do not possess. This makes multimodal LLMs particularly suited for advanced applications that necessitate a holistic understanding of multimodal information, such as chatbots that can interpret content.

The embodiments herein may provide parameterized prompts to an LLM and receive parameterized outputs in response. Thus, media content server 104, or a device or system adjunct to media content server 104, may produce such a prompt based on a pre-established prompt template and then transmit the prompt to the LLM. The LLM may respond with parameterized output, which can then be parsed to identify tokens therein.

### IV. Example Prefix Adapters and Use and Training Thereof

In an example application, a music recommendation service includes trained machine learning models that convert information about a user's musical preferences (e.g., their stated preferences, a set of tracks or albums searched for and/or selected and played by the user, a set of tracks or albums that a user engaged with positively, a set of the user's ratings of various tracks or albums) into a single embedding vector that represents the user's preferences in a high-dimensional embedding space. The embedding vector for the user can then be used to identify additional tracks or albums that the user might like (e.g., by finding embedding vectors that represent tracks or albums and that are proximate to the user's embedding vector within the embedding vector space), to identify playlists that the user might like (e.g., by finding public playlists of other users whose embedding vectors are proximate to the user's embedding vector within the embedding vector space), or other applications of the music recommendation service.

LLMs or other large generative models also operate according to an internal vector embedding space (e.g., the space in which input, intermediate, and/or output tokens of such a model are defined). However, because the specific structure of such embedding spaces are the idiosyncratic result of the training data and training process used to train such models, user-representing embedding vectors cannot be naively applied as tokens or other vectors to LLMs or other downstream models. Despite this limitation, it would be beneficial to translate user-representing embedding vectors into the 'native' embedding vector space of a downstream LLM or other model in order to efficiently 'inject' information about a user's preferences into the input of the downstream model, thereby allowing the downstream model to use its significant knowledge about the world to perform a task (e.g., generate a music, artist, or album recommendation, generate a playlist) while also being personalized to the preferences of the user. The embodiments described herein include the training of 'adapter' models that can perform such translation, using smaller amount of training data and less computational resources (e.g., processor cycles, memory use, storage use, network interconnect bandwidth, power) than alternative model personalization methods.

Many machine learning models can be characterized by an internal embedding vector space that semantically represents, in a high-dimensional embedding vector space, information about the subject of the machine learning model. For example, for a transformer-based LLM, an input set of tokens, each representing a respective word, word part, or set of multiple words of an input prompt, is mapped into respective token vectors in a token vector embedding space. The 'meaning' of each token is represented by the location of its respective token vector in the token vector embedding space, and the output tokens of the LLM can be translated back out of the token vector embedding space to generate a natural-language response to the input prompt. In another example, a generative model can be trained to generate novel images (or other content) via an encoder/decoder scheme, with an encoder model projecting an input training image into the latent space of a "hidden" embedding vector, and the decoder attempting to convert that embedding vector back into the training image. Such training results in the embedding space of the decoder's vector input representing the contents of potential output images in the latent space.

However, the specific semantic structure and organization of such embedding vector spaces are usually idiosyncratic, the result of stochastic processes during the training process and the specifics of the training dataset used. Thus, while such embedding vector spaces may represent useful information (e.g., about the content preferences of users of a media provisioning system, about the contents of images generated by a generative model), it is difficult to extract this information (e.g., in a human-interpretable format) or to translate such information between the embedding spaces of different machine learning models. However, it would be beneficial in many applications to be able to translate between such vector spaces, e.g., in order to make the information present in an embedding vector output by a first model available to a second model, allowing the second model to generate outputs with the benefit of the information in the first model's output. By providing such information in the 'native' embedding space of the second model, the computational costs of re-training the second model to interpret from the first model embedding space can be avoided and/or the 'waste' of some of the internal computational capacity of the second model being used to perform such 'translation' from the first model embedding space can be avoided.

Some of these benefits could be accomplished by using the same training data used to train the first model to re-train or fine-tune the second model (or even to generate such a second model *de novo*) to generate outputs conditioned on such information natively, without the use of the first model. However, such training can be computationally expensive, especially in examples wherein the second model is an LLM or other natural language model defined by many (e.g., billions, or trillions) of parameters to allow the model to exhibit a wide base of knowledge about specific tasks and about the world at large. In another example, the information applied to the first model to generate the first embedding vector could be applied as additional inputs to the second model (e.g., by appending tokens or other representations of user preferences, past user content selections, etc. to a prompt instructing the second model to perform a task conditioned thereon). However, this also implicates increased computational costs, as the input width of such a model must be wider (and thus the cost to inference the model significantly increased) to accommodate such expanded inputs. In yet another example, a third model could be trained to translate the embedding vector output of the first model into a multi-token representation thereof (e.g., a natural language description of a user's musical preferences) and that multi-token representation applied as additional input to the second model. However, this solution also implicates the increased computational costs of increasing the input width of the second model, as well as the cost to train the third model and perform inference using the third model.

The embodiments described herein provide a technical solution to these technical problems by training a small multi-layer translation model (e.g., a fully-connected, two-layer multilayer perceptron) to receive, from a first machine learning model or other source of such embedding vectors (e.g., from a database of such vectors, from a lookup table, from a statistical model fitted to a set of examples), an input vector in a first embedding vector space of the first model and output a set of one or more token vectors in a second embedding vector space of a second multi-layer machine learning model (e.g., a transformer-based LLM or other natural language model that receives inputs as a sequence of token vectors translated, e.g., from a tokenized version of an input prompt). The generated token vector(s) can then be applied, along with additional inputs (e.g., token vectors representing a prompt or other instruction to the second model), to the second model, allowing the second model to perform a task (e.g., to perform a task instructed in the prompt) in a manner that is informed by the information from the first embedding vector, as translated into the embedding vector space of the second model. The translated token vector(s) are applied to the second model as the initial input token(s) thereof e.g., first one, two, four, or some other number of initial input tokens of the second model, followed by other input tokens (e.g., representing a task prompt).

By translating the information in the first vector from the embedding vector space of the first model to the embedding vector space of the second model, the full set of information can be made available to the second model (compared to a translation into a truncated set of tokens or other method that may restrict the amount of information used). Additionally, the use of a small (e.g., one) set of prefix tokens to input the translated vector information into the second model results in only an insignificant increase in the necessary input width of the second model compared, e.g., to applying a multi-token summary of the first vector information, the full or truncated set of information used to generate the first vector, or some other longer multi-token representation of the information in the first vector. These significant benefits (with respect to the computational cost of obtaining the benefits of the first vector information) are obtained via the minimal, and relatively lesser, computational cost of inferencing the translator model to convert the first vector into one or more token vectors for input to the second model.

Such a translator model can be trained in a variety of ways, based on a variety of types of training data. Generally, the first model (used to generate the first vector, in the first vector embedding space) and second model (which receives inputs in a second vector embedding space) can be kept 'static' while one or both are repeatedly inferenced to train the relatively smaller translator model. For example, a set of first vectors that represent users of a content serving or recommendation system can be used along with records of those users' engagement with past content recommendations (e.g., generated in the past by the second model). A particular one of the first vectors could be applied to the translator model to generate a set of one or more input tokens that are applied, as prefix token(s) along with an instruction prompt, to generate a content recommendation. A correspondence between the output content recommendation and the recorded recommendation, along with the recorded past user engagement therewith, can then be used to update the translation model such that the output token vector(s) are more likely to result in the second model generating recommendations that result in improved engagement. Additionally, by training the translator model to generate tokens that are applied to the same input(s) of the second model (i.e., as a prefix to additional input(s)), the second model does not need to be fine-tuned to, e.g., identify 'break' tokens indicating the location(s) of such translated token(s) in an input, or to natively identify which tokens of an input represent such translated token(s).

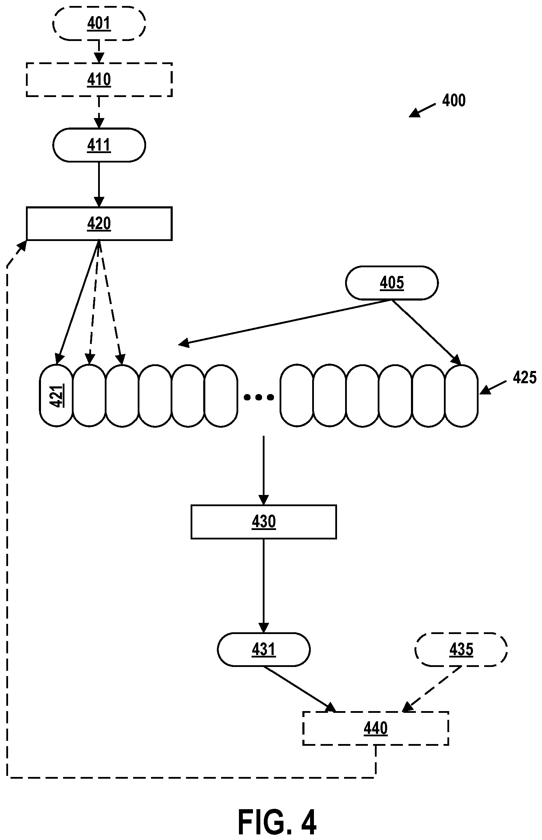

Figure 4 depicts, by way of example, aspects of a method 400 as described herein. The method 400 illustrated by Figure 4 may be carried out by a computing device, such as media content server 104, and/or one or more additional computing devices arranged to prepare digital audio content. Alternatively, the process can be carried out by other types of devices or device subsystems. A first vector embedding 411 within a first vector space represents an entity (e.g., the music preferences or other information about a user of a content streaming system) within the first embedding vector space. The first vector embedding 411 is projected by a first multi-layer model 420 into a first set of token vectors (e.g., including single token vector 421) within a second embedding vector space. The first set of token vectors represent the entity within the second embedding vector space.

The second embedding vector space is associated with a second multi-layer model 430 and differs from the first embedding space. For example, the first embedding space can be an embedding space into which a user-representation model 410 projects information 401 about users in order to represent the users by respective vector embeddings 411 in the first embedding space, and the second embedding space can be the 'native' embedding space of the input tokens (and optionally intermediate-layer tokens) of the second multi-layer model 430 (e.g., an internal embedding space of an LLM, transformer, or other multi-layer, multi-vector model).

The first set of token vectors (e.g., single token vector 421) and a representation of a prompt 405 (e.g., a sequence of tokens representing, in the second embedding space, a query or other prompt) are applied as input to the second multi-layer model 430, with the first set of token vectors being applied as the initial input(s) to the second multi-layer model (e.g., the first and optionally additional initial token inputs of the model 430) to generate a first output 431. The first output 431 could be an answer to the input prompt 405, personalized to the preferences or other information about the user present in the first set of token vectors.

The first multi-layer model 420 could be trained in a variety of ways. Such training could be done without fine-tuning or otherwise updating the second multi-layer model 430, thus avoiding the significant processor cycles, memory use, storage use, network interconnect bandwidth, power, or other computational costs of training an LLM or other large, highly competent model that may be defined by many millions or billions of parameters (or more). Instead, only the relatively fewer parameters of the first multi-layer model 420 (e.g., of a few hundred or thousands of parameters for each of two or more layers of a first multi-layer model 420 organized as a multi-layer perceptron or other multi-layer model architecture) could be learned. This can allow existing knowledge about users (e.g., as output from an already-trained model 410 that is able to distill content selections or other user information into embedding vectors) to be translated from the first embedding space into the second embedding space, allowing the second models' output to be personalized to a user using significantly less computational resources (the training of the first model 420, and the minimal increase in cost to add a single (or other small number) of input tokens to the input of the second model 430).

Such training could include inferencing the method 400 for a particular past example use of the second model 430, comparing the inferenced output to the recorded output from the past example, and then updating the first model 420 based on the comparison. For example, the first vector embedding 411 (or a set of input information 401 applied to the model 410 to generate the first embedding vector 411), prompt 405, and past model output 435 could be obtained for a particular past example use of the second model 430. The first vector embedding 411 could then be applied to the first model 420 to generate the first set of token vectors (e.g., single token vector 421), which are then applied, with the prompt 405, to the second model 430 to generate the model output 431. The model output 431 and past model output 435 could then be compared 440 (e.g., compared with respect to whether the outputs are identical, or compared by an LLM or other model or algorithm to determine whether they represent approximately the same content recommendation or other output information) and the result of the comparison used to update the first model 420. Such an update could be conditioned on some auxiliary information, e.g., information about whether a user accepted, rejected, or otherwise responded to the past model output 435.

For example, the model output 431 and past model output 435 could be content recommendations, and the model output 431 and past model output 435 being similar (or the same) could represent a positive result if the user accepted the content recommendation of the past model output 435 (and thus result in the first model 420 being updated to generate more similar outputs for similar inputs in the future). In the opposite example, the model output 431 and past model output 435 being similar (or the same) could represent a negative result if the user rejected the content recommendation of the past model output 435 (and thus result in the first model 420 being updated to generate less similar outputs for similar inputs in the future).

### V. Example Technical Improvements

These embodiments provide a technical solution to a technical problem. One technical problem being solved is allowing a natural language model (e.g., an LLM) or other multi-layer model to reason over and perform tasks with the benefit of the information already present in an embedding vector generated by another machine learning model or other process. This is accomplished without fine-tuning, increasing the input width of the model, or other alternatives that result in significantly increased computational costs (e.g., the increased processor cycles, memory, storage, network interconnect bandwidth, power, or other costs attendant to training a large machine learning model and/or to inferencing a machine learning model with an increased input width to accommodate longer inputs that less efficiently represent the information present in one or few token vectors translated from the source embedding vector space).

In practice, current solutions based on traditional deep learning are computationally expensive and do not scale to the hundreds of millions of users and tens or hundreds of millions of media content items, or other entities, that may be represented by respective embedding vectors in an embedding vector space other than the 'native' embedding vector space of an LLM or other model of interest for a particular task (e.g., content recommendation, content generation). Alternatively, attempts to use LLMs to expand such input vectors into 'conventional' multi-token representations thereof (e.g., natural language summary descriptions) and/or to simply directly apply the record data used to generate the input vector to the target model dramatically increase the computational requirements of inference by employing much larger vocabularies and/or larger context windows.

The embodiments herein overcome these limitations by training a translator model to translate an input vector, in a first embedding vector space, into a set of one or more input tokens in a second embedding vector space of a target model (e.g., a transformer-based LLM). The input token(s) are then applied to the target model as a prefix to a prompt or other task-specific input (e.g., as the first, first and second, or some other set number of initial token inputs of the target model). The first vector representation of a user, media content, or other entity in the first embedding vector space is rich and descriptive, and thus the token vectors generated therefrom can be compact and dense while still capturing the semantic meanings of the first vector. By mapping the first vector embeddings into the token vector space of the target model's 'native' embedding vector space (e.g., the space of input tokens to an LLM's transformer architecture), the target model can operate and reason over these token vectors directly, without fine-tuning. This allows information that may ordinarily be outside of the target model's knowledge base to be used.

By largely operating in vector spaces, these advanced features can be implemented efficiently and without requiring the increases in computational resources (e.g., processor, memory, network, and/or power capacity) employed by previous techniques. Additionally, the storage costs of maintaining records of entity-specific fine-tuned models can be avoided, since the translator model is trained to output input token vectors that a 'default,' non-fine-tuned target model can ingest as one or more prefix tokens.

These embodiments also provide improvements relative to the alternative of 'training' a set of prefix token vector(s) for each user, media content, or other entity. In such an alternative process, a computational cost is incurred for each entity for which the prefix vectors are needed, or even when the information representing an entity (e.g., the pattern of musical interests of a user) changes over time. In contrast, the embodiments described herein provide a single translator model that can be used to generate input token(s) for novel input vectors (e.g., for new users, updated users, new media content) incurring only the minimal cost to inference the small translator model.

Other technical improvements may also flow from these embodiments, and other technical problems may be solved. Thus, this statement of technical improvements is not limiting and instead constitutes examples of advantages that can be realized from the embodiments.

### VI. Example Operations

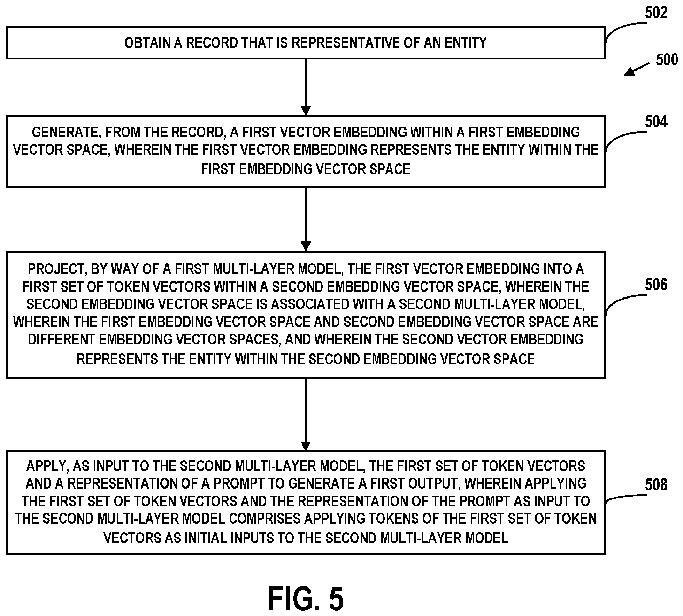

Figure 5 is a flow chart illustrating an example embodiment. The process 500 illustrated by Figure 5 may be carried out by a computing device, such as media content server 104, and/or one or more additional computing devices arranged to prepare digital audio content. Alternatively, the process can be carried out by other types of devices or device subsystems.

The embodiments of Figure 5 may be simplified by the removal of any one or more of the features shown therein. Further, these embodiments may be combined with features, aspects, and/or implementations of any of the previous figures or otherwise described herein.

Block 502 may involve obtaining a record that is representative of an entity. Such a record can include a history of media content selections (and/or representations of such selected media content), a user profile, a history of user acceptance/rejection of media content recommendations, user demographic information, user-specified preferences (e.g., user indications of preference/anti-preference for various genres of media content), user age, or other information about a user, application, organization, media content, media creator (e.g., artist, group of artists), genre of media content, or other entity.

Block 504 may involve generating, from the record, a first vector embedding within a first embedding vector space, wherein the first vector embedding represents the entity within the first embedding vector space.

Block 506 may involve projecting, by way of a first multi-layer model, the first vector embedding into a first set of token vectors within a second embedding vector space, wherein the second embedding vector space is associated with a second multi-layer model, wherein the first embedding vector space and second embedding vector space are different embedding vector spaces, and wherein the second vector embedding represents the entity within the second embedding vector space.

Block 508 may involve applying, as input to the second multi-layer model, the first set of token vectors and a representation of a prompt to generate a first output, wherein applying the first set of token vectors and the representation of the prompt as input to the second multi-layer model comprises applying tokens of the first set of token vectors as initial inputs to the second multi-layer model.

The embodiments of Figure 5 may involve additional or alternative steps, features, and/or limitations.

In some examples, the second embedding vector space is larger than the first embedding vector space. For example, the second embedding vector space can be between 500 and 20,000 elements in size and the first embedding vector space can be between 50 and 100 elements in size.

In some examples, the second multi-layer model is a generative model.

In some examples, the second multi-layer model is a natural language model and the first output is a second set of token vectors. For example, the second embedding vector space can be based on a vector size of a transformer used by the natural language model.

In some examples, the second multi-layer model is a natural language model and the first output is a second set of token vectors. For example, the first vector embedding could represent one or more of (i) a user or (ii) one or more media content items, the prompt could request identification of one or more further media content items, the second set of token vectors could represent at least one recommended further media content item, and the method could further include transmitting, to a user device, indications of the at least one recommended further media content item. In such an example, generating the first vector embedding from the record could include generating the first vector embedding based on embedding metadata associated with the user and/or the one or more media content items. Additionally or alternatively in such an example, the first multi-layer model could have been trained based on a training dataset that includes pairs of (i) records that represent respective users and/or media content items and (ii) records of user engagement with recommended further media content items generated, by the natural language model, based on the records that represent respective users and/or media content items. In such an example, parameters of the natural language model could be unchanged between use of the natural language model to generate the records of user engagement and use of the natural language model to generate the first output.

In some examples, the first multi-layer model can have been trained based on a training dataset that includes pairs of (i) records that represent respective entities and (ii) outcome values for outputs generated, by the second multi-layer model, based on the records that represent the respective entities. For example, parameters of the second multi-layer model could have been unchanged between use of the second multi-layer model to generate the outcome values and use of the second multi-layer model to generate the first output. Additionally or alternatively, training the first multi-layer model can include: (i) generating, from a plurality of different records, respective different vector embeddings within the first embedding vector space; (ii) projecting, by way of the first multi-layer model, the respective different vector embeddings into respective different sets of token vectors within the second embedding vector space; (iii) applying, as input to the second multi-layer model, the respective different sets of token vectors and a representation of the prompt to generate respective second outputs; and (iv) generating the outcome values of the training dataset based on the respective second outputs.

In some examples, generating the first vector embedding and projecting the first vector embedding into the first set of token vectors can be performed by a first system, applying the first set of token vectors and the representation of the prompt to generate the first output can be performed by a second system that is remote from the first system, and the method can further include: (i) transmitting, from the first system to the second system, an indication of the first set of token vectors; and (ii) transmitting, from the second system to the first system, an indication of the first output.

In some examples, the second multi-layer model is a non-autoregressive model.

In some examples, the first multi-layer model includes a multilayer perceptron having at least two layers.

### VII. Example Implementations and Experimental Results

The embodiments described herein were developed into a number of example implementations, which are described in greater detail in this section. Some of these example implementations were experimentally evaluated, and the results of such experimentation are also provided in this section.

LLMs have demonstrated remarkable capabilities in generating contextually relevant content, achieving significant advances in natural language processing tasks ranging from text completion to complex reasoning. The integration of LLMs into recommendation systems has enabled content suggestions that incorporate world knowledge and maintain coherent contextual understanding. However, a significant limitation persists in prior implementations: while these models excel at leveraging global knowledge patterns, they typically operate without adapting to individual user preferences. This gap is particularly pronounced in generative recommendation contexts, where personalization has consistently demonstrated substantial value.

The embodiments described herein were implemented as the Embedding-to-Prefix (E2P) approach. The embodiments described herein (e.g., E2P) address this challenge effectively, demonstrating substantial improvements across multiple domains including dialogue personalization, contextual headline generation, and predicted engagement for a media content item recommendation system. These results underscore the potential of efficient personalization techniques to significantly enhance LLM performance across diverse applications.

Prior attempts to incorporate user context in language models fall into two broad categories: (1) prompt representation of user context, which adds significant token overhead and fails to leverage dense vector representations, and (2) fine-tuning with semantic ID context representations, which requires computationally expensive model retraining whenever user representations change. These approaches face significant limitations in production environments where computational efficiency and adaptation to evolving user preferences are concerns.

Parameter-efficient fine-tuning (PEFT) methods have emerged as an alternative for adapting pre-trained language models to downstream tasks without more extensive retraining. However, existing PEFT approaches employ task-specific training without the benefit of existing context vectors, such as user-specific embeddings. While prompt tuning and prefix tuning can provide some benefit with respect to task adaptation, they do not provide mechanisms for directly incorporating pre-computed user embeddings into the generation process.

The E2P implementation of the embodiments described herein is a parameter-efficient approach that bridges user embeddings directly into the LLM hidden space via prefix adapters. This method enables personalization without modifying the core LLM parameters (thus avoiding the significant computational cost of training to obtain such modification) and without requiring prompting of user profiles or representations thereof (thus avoiding the significant computational cost of expanded model input width to accommodate such prompting), offering significant practical advantages for large-scale deployment.

E2P may include at least an embedding-to-prefix architecture, parameter-efficient training, and cross-domain validation.

The embedding-to-prefix architecture may involve use of existing dense user-preference-representing embeddings directly in the hidden embedding space of target LLMs via a learned mapping function, requiring only a single soft token (or other small number of initial tokens) prepended to the input sequence. This approach facilitates personalized generative recommendations without modifying pre-trained LLM parameters.

The parameter-efficient training may involve where learned mapping function is trained by learning only a fraction of the number of LLM parameters, while keeping the LLM weights frozen. This efficiency leads to significant reductions in computational cost, allowing for practical deployment in production recommendation systems with strict latency and cost constraints.

The cross-domain validation may involve experimental validation and demonstrated effectiveness across multiple domains, such as dialogue personalization, contextual headline generation, a media content items recommendation system, showing significant improvements over non-personalized baselines and competitive performance with more token-intensive approaches.

The embodiments described herein exhibit improvements relative to recent advances in both preference learning for language models and user representation learning. While previous approaches have explored various methods for conditioning language models on user or community data, the embodiments described herein offer zero-decode-overhead injection of fixed embeddings via a single soft prefix token (or other small number of soft prefix tokens, e.g., 2, 4).

The embodiments described herein provide a variety of benefits relative to alternative methods. For example, Parameter-efficient fine-tuning (PEFT) methods adapt pre-trained language models to downstream tasks without extensive retraining. However, While PEFT methods can reduce parameter overhead to train specialized models, they don't allow for the use of external vectors as conditioning input. The E2P method bridges this gap by enabling direct injection of external embedding vectors while maintaining parameter efficiency.

In another example, language models can be personalized by, e.g., establishing textual persona descriptions as a way to condition dialogue generation (consuming significant token budget), meta-learning to enable rapid adaptation to new personas (though still requiring extensive fine-tuning), and/or clustering users into discrete latent preference types within an alignment framework (though these methods either rely on textual descriptors or use discrete identifiers). In contrast, the approach described herein allows existing continuous representations to be repurposed. E2P directly operates on dense user embeddings, providing finer-grained personalization at the individual level rather than community-level conditioning.

In yet another example, vector-to-text bridges can generate semantic ID representations of entities (though requiring computationally expensive model retraining whenever user representations evolve). The E2P method offers zero-decode-overhead injection of fixed embeddings via a single soft prefix, preserving the information density of vector representations while eliminating the token overhead of prompting approaches. This makes it particularly suitable for large-scale production deployments where both personalization quality and computational efficiency are critical.

In a further example, user representation learning can be used to develop generalizable user representations that compress diverse aspects of user behavior into dense vector embeddings. While these approaches can create high-quality user representations, they do not address how to effectively inject these representations into LLMs for personalized generation. The methods described herein overcome this limitation, providing an efficient mechanism to leverage pre-computed embeddings within frozen LLMs without requiring model retraining or extensive fine-tuning.

As noted, LLMs have demonstrated exceptional capabilities in generating context-relevant text across domains. While these models excel at general text generation, personalizing their outputs to individual user preferences remains challenging. Below, notation and theoretical foundations are provided to facilitate understanding of the embodiments described herein, in particular the E2P approach.

Let x = (*x*₁,*x*₂,...,*x_{T}*) represent an input token sequence and y = (*y*₁,*y*₂,...,*y_{S}*) denote its target output sequence. An autoregressive language model defines a conditional probability distribution: $pθ \left(\left.y\right|x\right) = {\prod }_{t = 1}^{S} {p}_{θ} \left(\left.{y}_{t}\right|{y}_{< t},x\right)$ (1)
where *θ* represents the model parameters and **y***_{<t}* denotes the prefix of **y** up to position *t* - 1.

For personalized generation, this formulation is extended by incorporating a user context vector $c ∈ {ℝ}^{dc}$, which represents user preferences, behavior patterns, or demographic information encoded in a *d_{c}*-dimensional embedding space. An objective is to model the conditional probability *p_{θ}*(y|x, c) while keeping the pretrained LLM parameters *θ* frozen.

LLMs typically employ the decoder-only transformer architecture. In this framework, each token's representation is processed through *L* successive self-attention layers. At each layer *l* ∈ {1,...,*L*}, the hidden state ${h}_{l}^{\left(t\right)} ∈ {ℝ}^{{d}_{h}}$ for token position *t* is computed as: ${h}_{l}^{\left(t\right)} = LayerNorm \left(MLP\left(LayerNorm\left({h}_{l - 1}^{\left(t\right)}+Attention\left({Q}_{l}^{\left(t\right)}, {K}_{l}, {V}_{l}\right)\right)\right)\right)$ (2)
where ${Q}_{l}^{\left(t\right)}$, K*ₗ*, and V*ₗ* are the query, key, and value matrices derived from the hidden states at layer *l* - 1. The initial hidden state ${h}_{0}^{\left(t\right)}$ can be obtained by adding positional encodings to token embeddings: ${h}_{0}^{\left(t\right)} = E \left({x}_{t}\right) + P \left(t\right)$ (3)
where $E ∈ {ℝ}^{\left|V\right| \times dh}$ is the token embedding matrix for vocabulary *V,* and P provides positional information.

Parameter-efficient fine-tuning (PEFT) methods have emerged as effective approaches for adapting LLMs to specific tasks while updating only a small subset of parameters. These methods typically involve: low-rank adaptation (LoRA), which approximates weight updates with low-rank matrices; prompt tuning, which adds trainable vectors to the input embeddings; and/or prefix tuning, which prepends trainable vectors to key-value pairs in attention layers.

While these methods can adapt LLMs to specific tasks, they fail to address the challenge of incorporating external continuous representations of large number of entities and/or of entities whose representations vary over time, such as user embeddings.

Prefix tuning introduces trainable "virtual tokens" prepended to the input at each transformer layer. The canonical form modifies hidden states at each layer *l* as: ${H}_{l} = \left[{P}_{l}; {H}_{l - 1}\right]$ (4)
where ${P}_{l} ∈ {ℝ}^{k \times dh}$ represents the trainable prefix of length *k* at layer *l,* and [·;·] denotes concatenation along the sequence dimension. The embodiments described herein differ in a number of ways, including by instead adding a prefix only to the input layer, resulting in: ${H}_{0} = \left[p;E\left(x\right)\right]$ (5)
where $p ∈ {ℝ}^{dh}$ is a single soft token. This significantly reduces parameter count and computational overhead while maintaining competitive performance.

The embodiments described herein can leverage pre-computed user embeddings (or embeddings representing other entities or information) derived from various data sources. For example, for experimental validation, various types of user embeddings can be used. These embeddings can encapsulate rich information about user preferences and characteristics, serving as the foundation for the model personalization approach described herein. Unlike discrete user identifiers or textual descriptions, dense embeddings preserve semantic relationships between users and can represent complex preference patterns in a continuous space.

The E2P method addresses the challenge of effectively injecting such embeddings (and/or the information represented thereby) into frozen LLMs for personalized text generation with minimal computational overhead. Unlike methods that require extensive fine-tuning or long textual descriptions, E2P (and the other embodiments described herein) directly projects user representations into the model's hidden space, requiring minimal computational overhead while maintaining backbone model parameters frozen.

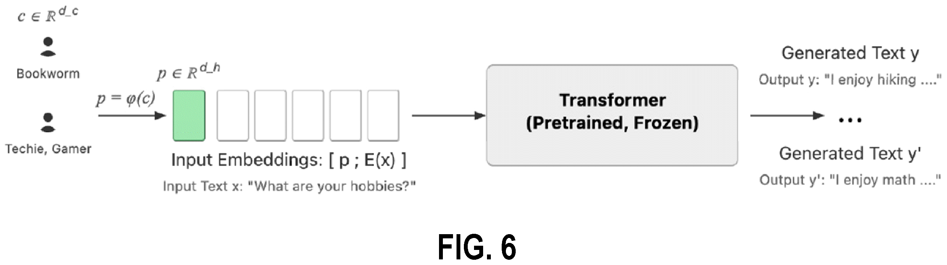

Figure 6 illustrates an overview of the E2P approach. Given a frozen pre-trained language model M ("Transformer") with parameters *θ* and a user embedding $c ∈ {ℝ}^{d}$ (where *d* is the dimension of the user embedding), E2P learns a projection function *ϕ* that maps *c* to a soft prefix token (or set of tokens) $p ∈ {ℝ}^{dh}$ (where *dₕ* is the hidden dimension of the language model). This prefix is prepended to the input sequence (E(x)) and influences the generation process through the model's self-attention mechanism. E2P can obtain personalization benefits by learning only the relatively limited number of projection parameters of the adapter model while keeping *θ* frozen, making it significantly more parameter-efficient than full fine-tuning approaches.

The projection module *ϕ* maps user embeddings to the LLM's (or other downstream model's) hidden space. For a user embedding $c ∈ {ℝ}^{d}$, *ϕ* can be defined as: $ϕ \left(c\right) = LayerNorm \left(ReLU\left({W}_{1}c\right)\right) {W}_{2} + b$ (6)
where, in the implemented example embodiment, ${W}_{1} ∈ {ℝ}^{4096 \times d} , {W}_{2} ∈ {ℝ}^{4096 \times dh}$, and $b ∈ {ℝ}^{dh}$. This example implementation balances expressiveness with efficiency, as the projection contains only two linear layers separated by a non-linearity, reducing the number of trainable parameters.

Unlike approaches that learn separate, static prefixes for specific tasks, users, or other personalization target entities, the projection described herein dynamically generates personalized prefixes from continuous user representations, allowing for generalization to new users, updated representations of existing users (e.g., as additional user activities/indications of preference are performed over time), and even interpolation between user preferences in the embedding space.

Given the projected vector $p = ϕ \left(c\right) ∈ {ℝ}^{dh}$, the projected vector is inserted as a soft token at the beginning of the input sequence to the downstream model (e.g., LLM or another transformer). For an input token sequence x = (*x*₁,...,*x_{T}*) with embeddings $E \left(x\right) = \left(E\left({x}_{1}\right),…,E\left({x}_{T}\right)\right) ∈ {ℝ}^{T \times dh}$ , the modified input becomes: ${E}^{∧} \left(x\right) = \left[p;E\left(x\right)\right] ∈ {ℝ}^{\left(T+1\right) \times dh}$ (7)
where [;] denotes concatenation along the input sequence dimension. This augmented embedding sequence is then processed by the downstream (e.g., language) model.

Inserting a single soft token (or set of 2, 3, 4, or some other small number of soft tokens) at the input embedding layer rather than injecting prefixes at every transformer layer provides a variety of benefits including: efficiency (a single soft token or a small number of such tokens adds minimal computational overhead during inference, with negligible impact on sequence length and memory requirements); deployability (modifying only the input layer allows the method to be deployed with standard inference pipelines that maintain frozen model weights); and/or effectiveness (empirically, a single soft token at the input layer was observed to achieve comparable performance to more complex approaches while being significantly more efficient).

The projection parameters were optimized while keeping the language model frozen. The training objective varied based on the domain:

For dialogue and text generation tasks, the standard language modeling objective was used. Given a user embedding c, its corresponding soft prefix *p* = *ϕ*(*c*), and a target sequence *y* = (*y*₁,...,*y_{T}*), the following cost function was increased: ${L}_{LM} \left(c\right) = {\sum }_{t = 1}^{T} {logp}_{θ} \left(\left.{y}_{t}\right|{y}_{< t},\left[p; x\right]\right)$ (8)
where *p_{θ}* denotes the probability distribution from the frozen language model with parameters *θ*.

For recommendation-oriented tasks with binary engagement labels (e.g., click/no-click), a Kahneman-Tversky Optimization was employed that leveraged both positive and negative outcomes: ${L}_{KT} \left(c\right) = {\sum }_{i = 1}^{N} {y}_{i} {logp}_{θ} \left(\left.{y}_{i}\right|\left[p; {x}_{i}\right]\right) + α \left(1-{y}_{i}\right) log \left(1-{p}_{θ}\left(\left.{y}_{i}\right|\left[p; {x}_{i}\right]\right)\right)$ (9)
where *yᵢ* ∈ {0, 1} is the engagement label for the *i*-th recommendation, *α* is a weighting factor balancing false positives and false negatives, and *p_{θ}*(*yᵢ*|[*p;xi*]) is the model's predicted probability of engagement.

During inference, E2P adds minimal computational overhead. For a new user with embedding *c_{new},* inference may include: computing the personalized prefix *p_{new}* = *ϕ*(*c_{new}*); prepending *p_{new}* to the input sequence; and generating text using the frozen language model with the augmented input.

The projection can be pre-computed and cached for known users, making the inference overhead equivalent to processing just one additional token. This efficiency makes E2P beneficial for deployment in production environments with strict latency requirements. Compared to methods that encode user information as text (often requiring significant amounts of tokens) or approaches that fine-tune separate models per user, E2P offers orders of magnitude greater efficiency while maintaining comparable personalization capabilities.

To evaluate the effectiveness of the E2P method, experiments were conducted across multiple domains, including personalized dialogue, personalized news headline generation, and real-world content recommendations.

A general LLM was used as the base model for all experiments described herein. The model parameters remained frozen throughout all experiments, with only the projection module parameters being trained. Training was performed using the AdamW optimizer with a learning rate of 5e-6. A batch size of 32 was used, and trained for 5 epochs. All experiments were conducted on a machine with 4xA100 80GB GPUs.

The methods described herein were evaluated on two non-production datasets and one production dataset. For the non-production datasets, which didn't have pre-computed user representations, embeddings were generated synthetically from text representations using a separate LLM. For the production dataset, pre-computed 120-dimensional user embeddings derived from historical interaction patterns were used. These embeddings capture user preferences across musical attributes such as genres, artists, and acoustic features, as well as user behavior. For textual user profiles, a prompt was constructed using the user's top artists, genres, as well as basic demographic information.

E2P was compared against the following baselines: no context (a generic decoder-only transformer with no personalization); and prompt context (a baseline that prepends the textual description of the persona or user profile directly to the input as a natural language prompt). The prompt context approach has been shown effective but incurs a token overhead. Domain-appropriate metrics were employed to evaluate performance across the datasets, such as the F1 score between the generated response and the ground truth was reported, as well as perplexity on the test set; measures of word overlap, bigram overlap, and longest common subsequence between generated headlines and reference headlines, respectively; and/or predicted engagement measured using binary click-through metrics, including likelihood of user engagement (e.g., providing a rating, review, or other engagement with suggested content) and hit-rate.

**Table 1 presents a comprehensive comparison of E2P against baselines across four domains: dialogue personalization, news headline generation, music recommendations, and podcast recommendations. All experiments used the same underlying approach with domain-specific metrics.E2P consistently outperformed baselines while requiring minimal token overhead**

| Domain | Method | Tokens/Ctxt | Metrics | | |
|---|---|---|---|---|---|
| | | | Perplexity | | |
| Two-persona dialogues | No Context | 0 | | 45.40 | |
| | Prompt-Persona | 47 | | 30.00 | |
| | E2P | 1 | | 24.67 | |
| | E2P-Random | 1 | | 26.56 | |

| | | | ROUGE-1 | ROUGE-2 | ROUGE- |
|---|---|---|---|---|---|
| Personalized news headlines | Baseline | 0 | 15.64 | 5.20 | 14.66 |
| | E2P | 1 | 17.75 | 5.91 | 16.75 |
| | E2P-Random | 1 | 15.57 | 5.76 | 14.79 |

| | | | Engagement | Affinity | |
|---|---|---|---|---|---|
| Music Rec. | Baseline | 0 | 28.0% | 0.432 | |
| | E2P | 1 | 31.6% | 0.463 | |
| | E2P-Random | 1 | 29.4% | 0.461 | |
| | | | Hitrate@30 | | |
| | Baseline | 0 | 16.10% | | |
| | E2P | 1 | 16.46% | | |
| Podcast Rec. | Prompt-Context | 41 | 17.76% | | |
| | E2P + Prompt | 42 | 18.30% | | |
| | E2P-Random | 1 | 16.22% | | |

In production-scale music recommendations, E2P showed a 12.97% improvement in predicted user engagement and a 7.3% increase in user-track affinity compared to the non-personalized baseline. The randomized version of E2P yielded substantially lower gains (4.97% engagement improvement), confirming that the personalization approach described herein provides meaningful benefits beyond both non-personalized and random selection.

To evaluate generalizability, E2P was applied to recommendation of podcast episodes. E2P achieved a 2.2% improvement in hitrate over the non-personalized baseline with only a single additional token. Notably, combining E2P with prompt context yielded a 13.5% improvement.

The consistent performance improvements across multiple domains-dialogue, news, music, and podcasts-demonstrate the generalizability of the approach described herein and its potential for broad applicability in personalization tasks. This cross-domain effectiveness is particularly notable given the minimal architectural changes required (typically adding just one token per context), which contrasts with domain-specific approaches that often require extensive modifications or fine-tuning.

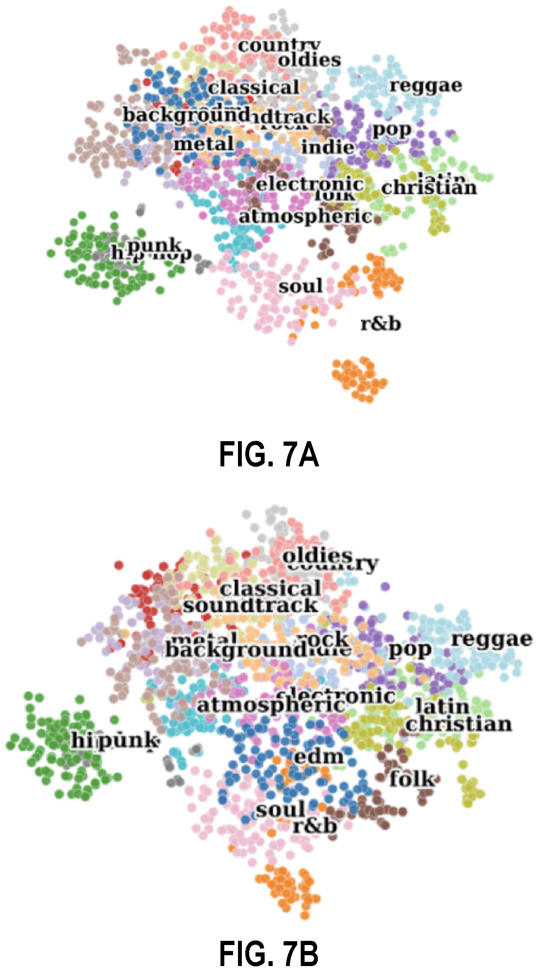

Figures 7A and 7B depict visualizations of user embedding properties in a user representation space and the prefix adapter space, respectively. Figure 7A shows a t-SNE visualization of a set of user embeddings colored by music genre preference clusters. Figure 7B shows a corresponding t-SNE visualization of the same users in prefix adapter space, demonstrating the preservation of preference clusters thereby, with enhanced separation between distinct user groups.

Algorithm 1 below summarizes the E2P training procedure.

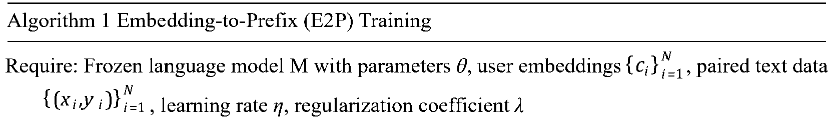

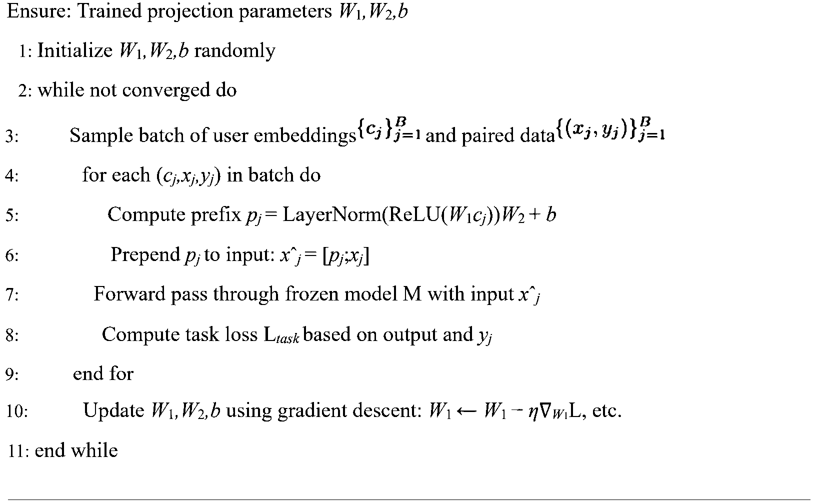

### VIII. Examples

According to certain examples, there is also disclosed:
Example 1. A computer-implemented method comprising:
   obtaining a record that is representative of an entity;
   generating, from the record, a first vector embedding within a first embedding vector space, wherein the first vector embedding represents the entity within the first embedding vector space;
   projecting, by way of a first multi-layer model, the first vector embedding into a first set of token vectors within a second embedding vector space, wherein the second embedding vector space is associated with a second multi-layer model, wherein the first embedding vector space and second embedding vector space are different embedding vector spaces, and wherein a second vector embedding represents the entity within the second embedding vector space; and
   applying, as input to the second multi-layer model, the first set of token vectors and a representation of a prompt to generate a first output, wherein applying the first set of token vectors and the representation of the prompt as input to the second multi-layer model comprises applying tokens of the first set of token vectors as initial inputs to the second multi-layer model.
Example 2. The computer-implemented method of example 1, wherein the second embedding vector space is larger than the first embedding vector space.
Example 3. The computer-implemented method of example 2, wherein the second embedding vector space is between 500 and 20,000 elements in size, and wherein the first embedding vector space is between 50 and 100 elements in size.
Example 4. The computer-implemented method of any preceding example, wherein the second multi-layer model is a generative model.
Example 5. The computer-implemented method of any preceding example, wherein the second multi-layer model is a natural language model, and wherein the first output is a second set of token vectors.
Example 6. The computer-implemented method of example 5, wherein the second embedding vector space is based on a vector size of a transformer used by the natural language model.
Example 7. The computer-implemented method of example 5 or 6, wherein the first vector embedding represents one or more of (i) a user or (ii) one or more media content items, wherein the prompt requests identification of one or more further media content items, and wherein the second set of token vectors represents at least one recommended further media content item, and wherein the method further comprises:
   transmitting, to a user device, indications of the at least one recommended further media content item.
Example 8. The computer-implemented method of example 7, wherein generating the first vector embedding from the record comprises generating the first vector embedding based on embedding metadata associated with the user and/or the one or more media content items.
Example 9. The computer-implemented method of example 7 or 8, wherein the first multi-layer model has been trained based on a training dataset that comprises pairs of (i) records that represent respective users and/or media content items and (ii) records of user engagement with recommended further media content items generated, by the natural language model, based on the records that represent respective users and/or media content items.
Example 10. The computer-implemented method of example 9, wherein parameters of the natural language model are unchanged between use of the natural language model to generate the records of user engagement and use of the natural language model to generate the first output.
Example 11. The computer-implemented method of any preceding example, wherein the first multi-layer model has been trained based on a training dataset that comprises pairs of (i) records that represent respective entities and (ii) outcome values for outputs generated, by the second multi-layer model, based on the records that represent the respective entities.
Example 12. The computer-implemented method of example 11, wherein parameters of the second multi-layer model are unchanged between use of the second multi-layer model to generate the outcome values and use of the second multi-layer model to generate the first output.
Example 13. The computer-implemented method of example 11 or 12, wherein training the first multi-layer model comprises:
   generating, from a plurality of different records, respective different vector embeddings within the first embedding vector space;
   projecting, by way of the first multi-layer model, the respective different vector embeddings into respective different sets of token vectors within the second embedding vector space;
   applying, as input to the second multi-layer model, the respective different sets of token vectors and a representation of the prompt to generate respective second outputs; and
   generating the outcome values of the training dataset based on the respective second outputs.
Example 14. The computer-implemented method of any preceding example, wherein generating the first vector embedding and projecting the first vector embedding into the first set of token vectors are performed by a first system, wherein applying the first set of token vectors and the representation of the prompt to generate the first output is performed by a second system that is remote from the first system, and wherein the method further comprises:
   transmitting, from the first system to the second system, an indication of the first set of token vectors; and
   transmitting, from the second system to the first system, an indication of the first output.
Example 15. The computer-implemented method of any preceding example, wherein the second multi-layer model is a non-autoregressive model.
Example 16. The computer-implemented method of any preceding example, wherein the first multi-layer model comprises a multilayer perceptron having at least two layers.
Example 17. A non-transitory computer-readable medium, having stored thereon program instructions that, upon execution by a computing system, cause the computing system to perform operations comprising:
   obtaining a record that is representative of an entity;
   generating, from the record, a first vector embedding within a first embedding vector space, wherein the first vector embedding represents the entity within the first embedding vector space;
   projecting, by way of a first multi-layer model, the first vector embedding into a first set of token vectors within a second embedding vector space, wherein the second embedding vector space is associated with a second multi-layer model, wherein the first embedding vector space and second embedding vector space are different embedding vector spaces, and wherein a second vector embedding represents the entity within the second embedding vector space; and
   applying, as input to the second multi-layer model, the first set of token vectors and a representation of a prompt to generate a first output, wherein applying the first set of token vectors and the representation of the prompt as input to the second multi-layer model comprises applying tokens of the first set of token vectors as initial inputs to the second multi-layer model.
Example 18. The non-transitory computer-readable medium of example 17, wherein the second multi-layer model is a natural language model, and wherein the first output is a second set of token vectors, wherein the first vector embedding represents one or more of (i) a user or (ii) one or more media content items, wherein the prompt requests identification of one or more further media content items, and wherein the second set of token vectors represents at least one recommended further media content item, and wherein the operations further comprise:
   transmitting, to a user device, indications of the at least one recommended further media content item.
Example 19. A system comprising:
   one or more processors; and
   memory, containing program instructions that, upon execution by the one or more processors, cause the system to perform operations comprising:
      obtaining a record that is representative of an entity;
      generating, from the record, a first vector embedding within a first embedding vector space, wherein the first vector embedding represents the entity within the first embedding vector space;
      projecting, by way of a first multi-layer model, the first vector embedding into a first set of token vectors within a second embedding vector space, wherein the second embedding vector space is associated with a second multi-layer model, wherein the first embedding vector space and second embedding vector space are different embedding vector spaces, and wherein a second vector embedding represents the entity within the second embedding vector space; and
      applying, as input to the second multi-layer model, the first set of token vectors and a representation of a prompt to generate a first output, wherein applying the first set of token vectors and the representation of the prompt as input to the second multi-layer model comprises applying tokens of the first set of token vectors as initial inputs to the second multi-layer model.
Example 20. The system of example 19, wherein the second multi-layer model is a natural language model, and wherein the first output is a second set of token vectors, wherein the first vector embedding represents one or more of (i) a user or (ii) one or more media content items, wherein the prompt requests identification of one or more further media content items, and wherein the second set of token vectors represents at least one recommended further media content item, and wherein the operations further comprise:
   transmitting, to a user device, indications of the at least one recommended further media content item.

### IX. Closing

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of non-transitory computer readable medium such as a storage device including RAM, ROM, a disk drive, a solid-state drive, or another tangible storage medium.

Moreover, a step or block that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments could include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purpose of illustration and are not intended to be limiting, with the true scope being indicated by the following claims.

## Claims

1. A computer-implemented method comprising:
obtaining a record that is representative of an entity;
generating, from the record, a first vector embedding within a first embedding vector space, wherein the first vector embedding represents the entity within the first embedding vector space;
projecting, by way of a first multi-layer model, the first vector embedding into a first set of token vectors within a second embedding vector space, wherein the second embedding vector space is associated with a second multi-layer model, wherein the first embedding vector space and second embedding vector space are different embedding vector spaces, and wherein a second vector embedding represents the entity within the second embedding vector space; and
applying, as input to the second multi-layer model, the first set of token vectors and a representation of a prompt to generate a first output, wherein applying the first set of token vectors and the representation of the prompt as input to the second multi-layer model comprises applying tokens of the first set of token vectors as initial inputs to the second multi-layer model.

2. The computer-implemented method of claim 1, wherein the second embedding vector space is larger than the first embedding vector space, preferably wherein the second embedding vector space is between 500 and 20,000 elements in size, and wherein the first embedding vector space is between 50 and 100 elements in size.

3. The computer-implemented method of any preceding claim, wherein the second multi-layer model is a generative model and/or is a non-autoregressive model.

4. The computer-implemented method of any preceding claim, wherein the second multi-layer model is a natural language model, and wherein the first output is a second set of token vectors.

5. The computer-implemented method of claim 4, wherein the second embedding vector space is based on a vector size of a transformer used by the natural language model.

6. The computer-implemented method of claim 4 or 5, wherein the first vector embedding represents one or more of (i) a user or (ii) one or more media content items, wherein the prompt requests identification of one or more further media content items, and wherein the second set of token vectors represents at least one recommended further media content item, and wherein the method further comprises:
transmitting, to a user device, indications of the at least one recommended further media content item.

7. The computer-implemented method of claim 6, wherein generating the first vector embedding from the record comprises generating the first vector embedding based on embedding metadata associated with the user and/or the one or more media content items.

8. The computer-implemented method of claim 6 or 7, wherein the first multi-layer model has been trained based on a training dataset that comprises pairs of (i) records that represent respective users and/or media content items and (ii) records of user engagement with recommended further media content items generated, by the natural language model, based on the records that represent respective users and/or media content items, preferably wherein parameters of the natural language model are unchanged between use of the natural language model to generate the records of user engagement and use of the natural language model to generate the first output.

9. The computer-implemented method of any preceding claim, wherein the first multi-layer model has been trained based on a training dataset that comprises pairs of (i) records that represent respective entities and (ii) outcome values for outputs generated, by the second multi-layer model, based on the records that represent the respective entities.

10. The computer-implemented method of claim 9, wherein parameters of the second multi-layer model are unchanged between use of the second multi-layer model to generate the outcome values and use of the second multi-layer model to generate the first output.

11. The computer-implemented method of claim 9 or 10, wherein training the first multi-layer model comprises:
generating, from a plurality of different records, respective different vector embeddings within the first embedding vector space;
projecting, by way of the first multi-layer model, the respective different vector embeddings into respective different sets of token vectors within the second embedding vector space;
applying, as input to the second multi-layer model, the respective different sets of token vectors and a representation of the prompt to generate respective second outputs; and
generating the outcome values of the training dataset based on the respective second outputs.

12. The computer-implemented method of any preceding claim, wherein generating the first vector embedding and projecting the first vector embedding into the first set of token vectors are performed by a first system, wherein applying the first set of token vectors and the representation of the prompt to generate the first output is performed by a second system that is remote from the first system, and wherein the method further comprises:
transmitting, from the first system to the second system, an indication of the first set of token vectors; and
transmitting, from the second system to the first system, an indication of the first output.

13. The computer-implemented method of any preceding claim, wherein the first multi-layer model comprises a multilayer perceptron having at least two layers.

14. A non-transitory computer-readable medium, having stored thereon program instructions that, upon execution by a computing system, cause the computing system to perform operations comprising:
obtaining a record that is representative of an entity;
generating, from the record, a first vector embedding within a first embedding vector space, wherein the first vector embedding represents the entity within the first embedding vector space;
projecting, by way of a first multi-layer model, the first vector embedding into a first set of token vectors within a second embedding vector space, wherein the second embedding vector space is associated with a second multi-layer model, wherein the first embedding vector space and second embedding vector space are different embedding vector spaces, and wherein a second vector embedding represents the entity within the second embedding vector space; and
applying, as input to the second multi-layer model, the first set of token vectors and a representation of a prompt to generate a first output, wherein applying the first set of token vectors and the representation of the prompt as input to the second multi-layer model comprises applying tokens of the first set of token vectors as initial inputs to the second multi-layer model.

15. A system comprising:
one or more processors; and
memory, containing program instructions that, upon execution by the one or more processors, cause the system to perform operations comprising:
obtaining a record that is representative of an entity;
generating, from the record, a first vector embedding within a first embedding vector space, wherein the first vector embedding represents the entity within the first embedding vector space;
projecting, by way of a first multi-layer model, the first vector embedding into a first set of token vectors within a second embedding vector space, wherein the second embedding vector space is associated with a second multi-layer model, wherein the first embedding vector space and second embedding vector space are different embedding vector spaces, and wherein a second vector embedding represents the entity within the second embedding vector space; and
applying, as input to the second multi-layer model, the first set of token vectors and a representation of a prompt to generate a first output, wherein applying the first set of token vectors and the representation of the prompt as input to the second multi-layer model comprises applying tokens of the first set of token vectors as initial inputs to the second multi-layer model.
